# EUROPÄISCHE PATENTSCHRIFT

(11) **EP 1 497 577 B1**
(45) Veröffentlichungstag und Bekanntmachung des Hinweises auf die Patenterteilung: **12.12.2007**
(21) Anmeldenummer: 03727189.7
(22) Anmeldetag: 10.04.2003
(51) Int. Cl.: F16H 61/12

(54) **GETRIEBESTEUERUNG UND VERFAHREN ZUM BESTIMMEN EINES ZIELGANGES BEI EINEM AUTOMATISIERTEN GETRIEBE**
TRANSMISSION CONTROLLER AND METHOD FOR DETERMINING A TARGETED GEAR IN AN AUTOMATIC TRANSMISSION
COMMANDE DE CHANGEMENT DE VITESSE ET PROCEDE POUR DETERMINER UN RAPPORT CIBLE DANS UNE BOITE DE VITESSES AUTOMATIQUE

(30) Priorität: 10.04.2002 DE 10215715; 30.04.2002 DE 10219255; 12.11.2002 DE 10252409
(43) Veröffentlichungstag der Anmeldung: 19.01.2005
(73) Patentinhaber: LuK Lamellen und Kupplungsbau Beteiligungs KG, 77815 Bühl (DE)
(72) Erfinder: EGGERT, Thomas, 76131 Karlsruhe (DE); GALLION, Michael, Warwick CV34 5PB (GB); MOOSHEIMER, Johannes, 77815 Bühl (DE)
(86) Internationale Anmeldenummer: PCT/DE2003/001193
(87) Internationale Veröffentlichungsnummer: WO 2003/087629

(56) Entgegenhaltungen:
- DE-A- 19 527 414
- DE-A- 19 749 681
- US-A- 4 635 508
- PATENT ABSTRACTS OF JAPAN vol. 2002, no. 12, 12. Dezember 2002 (2002-12-12) & JP 2002 227991 A (AISIN SEIKI CO LTD), 14. August 2002 (2002-08-14)

## Beschreibung

Die vorliegende Erfindung bezieht sich auf eine Getriebesteuerung und ein Verfahren zum Bestimmen eines Zielganges bei einem automatisierten Getriebe in einem Antriebsstrang eines Fahrzeuges.

Fahrzeuge mit einer automatisierten Kupplung oder einem automatisierten Getriebe im Antriebsstrang sind aus der Fahrzeugtechnik bekannt. Insbesondere bei dem automatisierten Getriebe kann die Gangwahl und der Gangwechsel selbständig durchgeführt werden. Es hat sich jedoch gezeigt, dass bei einem Ausfall der Übermittlung oder bei fehlerhaft übermittelten Raddrehzahlen eine sichere Zielgangberechnung unter Umständen nicht mehr stattfinden kann.

Daher kann z. B. vorgesehen sein, dass die Endstufen der Getriebeaktorik abgeschaltet werden, also ein sogenannter shut-down (Herunterfahren) durchgeführt wird. Der sogenannte shut-down kann jederzeit in jeder Getriebeposition ausgelöst werden. Für eine Aufhebung des shut-downs ist es erforderlich, dass die Zündung zwischenzeitlich ausgeschaltet werden muss und der verursachende Fehler entsprechend herausgefiltert wird. Sollte der verursachende Fehler immer noch aktiv sein, kann das Fahrzeug in diesem Fall mit eingelegtem Gang nicht mehr bewegt werden. Demnach ist dadurch die Verfügbarkeit und die Sicherheit beim Betrieb des Fahrzeuges eingeschränkt.

In der gattungsbildenden US 4, 635, 508 ist ein Verfahren offenbart, bei dem bei einem fehlerhaften Geschwindigkeitssignal der eingelegte Gangbeibehalten wird.

Demnach liegt der vorliegenden Erfindung die Aufgabe zugrunde, eine Getriebesteuerung und ein Verfahren zum Bestimmen eines Zielganges bei einem automatisierten Getriebe in einem Antriebsstrang eines Fahrzeuges vorzuschlagen, durch die die Fahrzeugverfügbarkeit und die Fahrzeugsicherheit erhöht wird.

Diese Aufgabe kann verfahrensmäßig durch ein Verfahren zum Bestimmen eines Zielganges bei einem automatisierten Getriebe in einem Antriebsstrang eines Fahrzeuges gelöst werden, bei dem bei einer Betriebssituation, in der die Fahrzeuggeschwindigkeit nicht sicher ermittelbar ist, der aktuell eingelegte Gang beibehalten wird.

Demnach wird, wenn die Fahrzeuggeschwindigkeit nicht mehr mit entsprechender Sicherheit durch die Getriebesteuerung oder dergleichen ermittelt werden kann, der aktuell vorliegende Gang, welcher in dem Getriebe eingelegt ist, entsprechend eingefroren. Dies bedeutet, dass ein Gangwechsel in diesem Fall nicht möglich ist.

Erfindungsgemäß wird jedoch die Bestromung der Endstufen der Getriebeaktoren dabei vorzugsweise aufrecht erhalten, um somit eine begonnene Schaltung noch sicher abschließen zu können.

Im Rahmen der Erfindung ist vorgesehen, dass der eingefrorene aktuelle Gang solange beibehalten wird, bis z. B. der Fahrer den Gangwahlhebel auf die Neutralstellung bewegt. Bei einer Neutralganganforderung kann dann der eingefrorene Gang wieder herausgenommen werden, da sich das Getriebe in diesem Fall in der Neutralstellung befindet und somit keine sicherheitskritischen Situationen auftreten können.

Wenn z. B. der Gangwahlhebel wieder in die Fahr-Position bzw. Drive-Position gebracht wird und der Fahrer das Fahrpedal betätigt, insbesondere über einen vorbestimmten Grenzwert, kann gemäß einer Weiterbildung der vorliegenden Erfindung vorgesehen werden, dass dann ein Gang eingelegt wird, bei dem ein Überdrehen des Motors auch bei hohen Geschwindigkeiten vermieden wird. Dies kann z. B. dadurch erreicht werden, dass als Gang der 4. oder 5. Gang gewählt wird.

Wenn der Gangwahlhebel z. B. in die R-Position (rückwärts) gebracht wird, kann gemäß einer anderen Weiterbildung der Erfindung vorgesehen sein, dass der Neutralgang eingelegt bleibt; denn es kann nicht ausgeschlossen werden, dass sich das Fahrzeug mit hoher Geschwindigkeit vorwärts bewegt.

Besonders vorteilhaft ist es, dass das erfindungsgemäße Verfahren nahezu für jedes Getriebe-System verwendet werden kann, dass eine automatische Gangauswahl ermöglicht.

Die der Erfindung zugrundeliegende Aufgabe kann auch durch eine Getriebesteuerung für ein automatisiertes Getriebe, insbesondere zum Durchführen des Verfahrens, gelöst werden, bei der bei einer Betriebssituation, in der die Fahrzeuggeschwindigkeit nicht sicher ermittelbar ist, der aktuell eingelegte Gang beibehalten wird.

Weitere Vorteile und vorteilhafte Ausgestaltungen ergeben sich aus den Unteransprüchen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Verfahren zum Bestimmen eines Zielganges bei einem automatisierten Getriebe in einem Antriebsstrang eines Fahrzeuges, bei dem in einer Betriebssituation, in der eine Fahrzeuggeschwindigkeit nicht sicher ermittelbar ist, der aktuell eingelegte Gang beibehalten wird, **dadurch gekennzeichnet, dass** bei dieser Betriebssituation jede Endstufe der Getriebesteuerung bestromt wird, bis eine begonnene Schaltung beendet wird oder der aktuelle Gang solange beibehalten wird, bis eine Neutralstellung des Getriebes angefordert wird.

2. Verfahren nach Anspruch 1, **dadurch gekennzeichnet, dass** die Neutralanforderung durch einen Fahrer durch Bewegen eines Gangwahlhebels in die Neutralstellung durchgeführt wird.

3. Verfahren nach Anspruch 2, **dadurch gekennzeichnet, dass**, wenn der Gangwahlhebel in eine Fahr-Position bewegt wird und das Fahrpedal über einen vorbestimmten Grenzwert betätigt wird, ein ermittelter Zielgang eingelegt wird.

4. Verfahren nach Anspruch 3, **dadurch gekennzeichnet, dass** als Zielgang der 4. oder 5. Gang gewählt wird.

5. Verfahren nach Anspruch 2, **dadurch gekennzeichnet, dass**, wenn der Gangwahlhebel in die R-Position bewegt wird, der Neutralgang beibehalten wird.

6. Getriebesteuerung für ein automatisiertes Getriebebei der in einer Betriebssituation, in der die Fahrzeuggeschwindigkeit nicht sicher ermittelbar ist, der aktuell eingelegte Gang beibehalten wird, **dadurch gekennzeichnet, dass** bei dieser Betriebssituation jede Endstufe der Getriebesteuerung bestromt wird, bis eine begonnene Schaltung beendet wird oder der aktuelle Gang solange beibehalten wird, bis eine Neutralstellung des Getriebes angefordert wird.

## Claims

1. A method for determining a target gear in an automated transmission in a drive train of a motor vehicle, in which in an operating situation, in which a velocity of a motor vehicle cannot be determined reliably, the presently shifted gear is maintained, wherein in this operating situation each end stage of the transmission control system is provided with power, until a shift process, which has been initiated, is completed, or the current gear is maintained, until a neutral position of the transmission is requested.

2. A method according to claim 1, wherein the neutral request is performed by a driver through moving a gear selector lever into the neutral position.

3. A method according to claim 2, wherein, when the gear selector lever is moved into a driving position and the accelerator pedal is operated beyond a certain threshold value, a determined target gear is shifted.

4. A method according to claim 3, wherein the 4^{th} gear or the 5^{th} gear are selected as target gears.

5. A method according to claim 2, wherein the neutral gear is maintained, when the gear selector lever is moved into the R-position.

6. A transmission control system for an automated transmission, in which in an operating situation, in which the velocity of the vehicle cannot be determined reliably, the presently shifted gear is maintained, wherein in this operating situation each end stage of the transmission control system is provided with power, until a shift process that has been initiated, is completed, or the current gear is maintained, until a neutral position of the transmission is requested.

## Revendications

1. Procédé pour déterminer un rapport cible dans une boîte de vitesses automatisée installée dans une cinématique de transmission d'un véhicule, dans lequel la vitesse actuelle enclenchée est maintenue, dans le cas d'une situation de fonctionnement où la vitesse dudit véhicule ne peut pas être déterminée de manière fiable, **caractérisé en ce que**, dans cette situation de fonctionnement, chaque étage final de la commande de changement de vitesse est mis sous courant tant qu'un passage de vitesse n'est pas terminé ou que la vitesse actuelle est maintenue tant qu'une position neutre n'est pas demandée.

2. Procédé selon la revendication 1, **caractérisé en ce que** la demande de la position neutre par un conducteur s'effectue par le déplacement d'un sélecteur des vitesses en position neutre.

3. Procédé selon la revendication 2, **caractérisé en ce qu'**un rapport cible déterminé est enclenché lorsque le sélecteur des vitesses est déplacé en une position de marche et que la pédale d'accélérateur est actionnée au-delà d'une valeur limite déterminée.

4. Procédé selon la revendication 3, **caractérisé en ce que** le rapport cible est la 4^{ième} ou 5^{ième} vitesse.

5. Procédé selon la revendication 2, **caractérisé en ce que** la position neutre est maintenue lorsque le sélecteur des vitesses est déplacé dans la position marche arrière.

6. Commande de changement de vitesse pour une boîte de vitesses automatisée au moyen de laquelle la vitesse actuellement enclenchée est maintenue dans le cas d'une situation de fonctionnement ne permettant pas de déterminer fiablement la vitesse du véhicule, **caractérisée en ce que**, dans cette situation de fonctionnement, chaque étage final de la commande de changement de vitesse est mis sous courant tant que le passage entamé d'une vitesse n'est pas terminé ou que le rapport actuel est maintenu tant qu'une position neutre du changement de vitesse n'a pas été demandée.
